# EUROPEAN PATENT SPECIFICATION

(11) **EP 2 170 001 B1**
(45) Date of publication and mention of the grant of the patent: **13.01.2016**
(21) Application number: 08305623.4
(22) Date of filing: 30.09.2008
(51) Int. Cl.: H04W 48/12, H04L 29/08

(54) **Embedding graphic data in a WIFI beacon frame**
Einbettung grafischer Daten in einen Wi-Fi-Beacon-Rahmen
Insérer des données graphiques dans une trame de balises sans fil (WIFI)

(43) Date of publication of application: 31.03.2010
(73) Proprietor: Motorola Mobility LLC, Libertyville, IL 60048 (US)
(72) Inventor: Del Olmo, Diego Garcia, 31000, Toulouse (FR); Cendon-Martin, Bruno, 31200, Toulouse (FR)
(74) Representative: Delumeau, François Guy

(56) References cited:
- EP-A- 1 215 864
- EP-A- 1 463 243
- O'HARA BOB: "Addition of a Vendor-specific Information Element" IEEE 802.11-04/522R0, [Online] 10 May 2004 (2004-05-10), pages 1-2, XP002518060 Retrieved from the Internet: URL:https://mentor.ieee.org/802.11/file/04 /11-04-0522-00-000m-vendor-specific-ie.doc >

## Description

### FIELD

Disclosed is a device that is configured to process graphic data and/or instructions embedded in a vendor specific field of a beacon frame and a method of an access point for transmitting such a vendor specific field.

### BACKGROUND

With the advent of Internet-based methods, many mobile communication devices come equipped with multiple transceivers for communication over different types of networks such as wireless fidelity (WIFI) or wireless local area network (WLAN) in addition to Global System for Mobile Communications (GSM) and Code Division Multiple Access (CDMA) networks, depending upon preferences and efficiencies. Dual-mode mobile communication devices leverage the ubiquity of wide-area networks (GSM and CDMA) with the high performance and low operational costs of local-area WIFI networks. WIFI is the trade name for the popular wireless technology used in home networks, mobile phones, video games and more. WIFI "hot spots" are installed in offices or homes, hotels, restaurants, airports and neighborhood area networks. It is expected that the hotspots will expand their reach as more systems are installed. Particularly in areas with clusters of retail enterprises such as hotels and restaurants, a user of a mobile communication device may be in range of a plurality of wide-area networks and WIFI networks simultaneously.

A WIFI access point can wirelessly connect a device to the wired Internet. A WIFI access point transmits a beacon frame which a mobile device can detect and process. The beacon frame provides information about its associated access point and portions of it are reproduced on a "WIFI network list" which can be exhibited on a display device. The WIFI network list may exhibit a plurality of available networks, depending upon the location of the user at that time. When a user accesses the "network list" of available WIFI networks at that particular location, a user may view the list and choose with which of the plurality of WIFI networks to establish a connection. It may not be clear to a user the origins of a plurality of available WIFI networks. Document EP 1463243A shows a method of displaying information, icons, images on a mobile device in a WLAN environment based on the discovered AP (beacon, SSID/BSSID). The image data are prestored on the mobile device and selected according to the discovered AP.

### BRIEF DESCRIPTION OF THE DRAWINGS

FIG. 1 depicts a device, such as a mobile communication device and a plurality of access points, each of which transmitting at least one beacon frame;
FIG. 2 is an IEEE table describing elements of a beacon frame body;
FIG. 3 depicts two WIFI network lists side-by-side, where the WIFI network list on the left of the figure is a standard list, and where the WIFI network list on the right side of the figure is a WIFI network list including graphic output based on graphic data received via a vendor specific field of a beacon frame transmitted by an access point;
FIG. 4 is a signal flow diagram illustrating an access point transmitting at least one beacon frame having a vendor specific field populated with graphic data that is detected by a device;
FIG. 5 illustrates a vendor specific field format having allocated bandwidth for content and a series of vendor specific fields having graphic data that when assembled and exhibited in a WIFI network list, provides an assembled graphic image; and
FIG. 6 illustrates a series of beacon frames transmitted by an access point that include vendor specific fields having embedded graphic data that when assembled and exhibited in a WIFI network list, provides animation in the WIFI network list.

### DETAILED DESCRIPTION

It would be beneficial if a user, reviewing a WIFI network list, were able to easily distinguish the origin of an available WIFI network. It would be further beneficial if a user were able to easily distinguish the origins of a plurality of available WIFI networks when viewing a WIFI network list. It would also be beneficial to an owner or operator of an access point to provide its own service information to a user viewing a WIFI network list.

Disclosed is a device configured to process graphic data and/or instructions embedded in a vendor specific field of a beacon frame and a method of an access point for transmitting such a vendor specific field. The device is configured to detect a WIFI beacon frame, read graphic data and/or process instructions of a vendor specific field of the beacon frame, generate graphic output based on the graphic data of the vendor specific field, and to exhibit the graphic output in a WIFI network list on a display. A WIFI network list is a list of WIFI networks that are detected by the device. The device is further configured to replace and/or modify a standard WIFI network list and/or add indicia to a standard WIFI network list based on the graphic data and/or instructions of one or more vendor specific fields. A series of beacon frames with service information embedded in their vendor specific fields provides for assembled graphic output and/or animation as graphic output.

Beneficially an owner or operator of an access point can provide its own service information to a user reviewing a WIFI network list. An access point can populate and transmit a beacon frame including a vendor specific field so that the vendor specific field is embedded with graphic data in a form that is readable by a WIFI application stored on another device.

The Institute of Electrical and Electronics Engineers, New York (IEEE) provides standards for WIFI. A table describing the beacon frame body is described below. The vendor specific frame is used to carry information not defined in this standard within a single defined format, so that reserved information elements IDs are not usurped for nonstandard purposes and so that interoperability is more easily achieved in the presence of nonstandard information. Beacon Frames are frames that have control information and are transmitted to help a wireless station to identify nearby wireless access points (AP) in passive scanning mode. They tell the stations in the Basic Service Set (BSS) about the existence of the network. They can also be transmitted by the AP for polling purposes. The Beacon Frame sent by the AP contains control information and can be used by Mobile stations to locate an AP if it is on active scanning mode.

The vendor specific field is at least in part populated with the graphic data configured so that when read and output by another device, such as a mobile device, the graphic data is output as a graphic image. Graphic data is data in any suitable format that when processed provides graphic output. Graphic output is indicia exhibited on a display device.

The device is configured to process graphic data and/or instructions embedded in a vendor specific field. The device is configured to receive a series of beacon frames each including a vendor specific field having embedded graphic data that is assembled into a complete graphic image by processing the series. The device can be further configured to assemble the graphic data if the graphic data is divided into several beacon frames. The device is configured to receive a series of beacon frames, each including a vendor specific field having embedded graphic data that is assembled as animated graphic output on the display. Animation is moving diagrams or cartoons that are made up of a sequence of images displayed one after the other. Animated graphic output is animation exhibited on a display device. The user viewing a WIFI network list with graphic indicia relating to the particular access point may be able to easily distinguish the origin of an available WIFI network. It would be further beneficial if a user were able to easily distinguish the origins of a plurality of available WIFI networks.

The instant disclosure is provided to explain in an enabling fashion the best modes of making and using various embodiments in accordance with the present invention. The disclosure is further offered to enhance an understanding and appreciation for the invention principles and advantages thereof, rather than to limit in any manner the invention. While the preferred embodiments of the invention are illustrated and described here, it is clear that the invention is not so limited. Numerous modifications, changes, variations and substitutions will occur to those skilled in the art having the benefit of this disclosure without departing from the scope of the present invention as defined by the following claims.

It is understood that the use of relational terms, if any, such as first and second, up and down, and the like are used solely to distinguish one from another entity or action without necessarily requiring or implying any actual such relationship or order between such entities or actions.

Much of the inventive functionality and many of the inventive principles are best implemented with or in software programs or instructions and integrated circuits (ICs) such as application specific ICs. In the interest of brevity and minimization of any risk of obscuring the principles and concepts according to the present invention, discussion of such software and ICs, if any, is limited to the essentials with respect to the principles and concepts within the preferred embodiments.

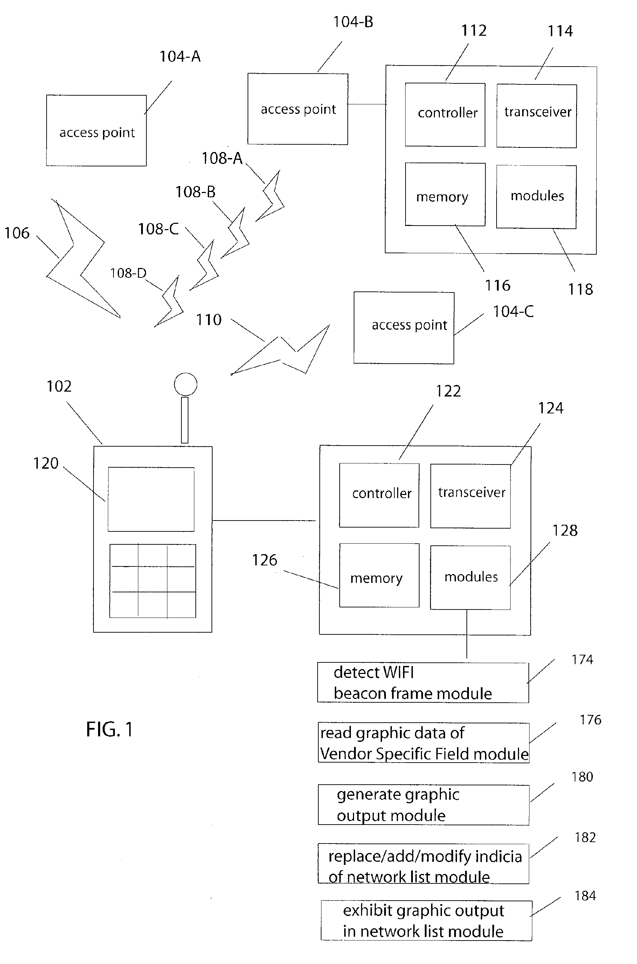

FIG. 1 depicts a device, such as a mobile communication device and a plurality of access points, each of which configured to transmit at least one beacon frame. The mobile communication device 102 may be implemented as a cellular telephone (also called a mobile phone). The mobile communication device 102 represents a wide variety of devices that have been developed for use within various networks. Such handheld communication devices include, for example, cellular telephones, messaging devices, personal digital assistants (PDAs), notebook or laptop computers incorporating communication modems, mobile data terminals, application specific gaming devices, video gaming devices incorporating wireless modems, and the like. Any of these portable devices may be referred to as a mobile station or user equipment. Herein, wireless communication technologies may include, for example, voice communication, the capability of transferring digital data, SMS messaging, Internet access, multi-media content access and/or voice over internet protocol (VoIP). It is understood that the device 102 may also be a stationary device.

The access points 104-A, 104-B and 104-C are depicted as remote servers. The access points 104-A, 104-B and 104-C may be of any suitable configuration. The access points 104-A, 104-B and 104-C may be implemented as a single server or as a plurality of servers in communication in any arrangement. The operations of the access points 104-A, 104-B and 104-C may be distributed among different servers or devices that may communicate in any manner. It is understood that the depiction in FIG. 1 is for illustrative purposes.

The access points 104-A, 104-B and 104-C are depicted as transmitting signals, in particular, beacon frames 106, 108-A, 108-B, 108-C, 108-D and 110 that may detected by the mobile communication device 102. Each access point 104-A, 104-B and 104-C may populate its respective beacon frames 106, 108-A, 108-B, 108-C, 108-D and 110 with different service information about the access point from which it originated. Beacon frames 108-A, 108-B, 108-C and 108-D represent a series of beacon frames, each including a vendor specific field.

An access point, for example, access point 104-B, may include a processor or controller 112, a transceiver 114 to transmit the beacon frames, and a memory 116 to store modules 118 which can contain instructions that can be processed by the controller 112. A processor is the logic circuitry that responds to and processes the basic instructions that drive a computer. A transceiver is a transmitter and receiver housed together in a single unit and having some circuits in common, often for portable or mobile use. The mobile communication device 102 may include a display 120 that can display indicia, in particular a WIFI network list, a controller 122, a transceiver to receive the beacon frames 124, and a memory 126 to store modules 128 which can contain instructions that can be processed by the controller 122. The modules of the device 102 may include a detect WIFI beacon frame module 174, a read graphic data of the vendor specific field (VSF) module 176, a generate graphic data output module 180, a replace/add/modify indicia of the network list module 182 and an exhibit graphic output in the network list module 184. A WIFI beacon frame is a beacon frame. Again, beacon frames are frames that have control information and are transmitted to help a wireless station to identify nearby wireless access points (AP) in passive scanning mode. They tell the stations in the Basic Service Set (BSS) about the existence of the network. They can also be transmitted by the AP for polling purposes. The Beacon Frame sent by the AP contains control information and can be used by Mobile stations to locate an AP if it is on active scanning mode.

The modules can carry out certain processes of the methods as described herein. Steps of methods may involve modules and modules may be inferred by the methods discussed herein. The modules can be implemented in software, such as in the form of one or more sets of prestored instructions, and/or hardware, which can facilitate the operation of the mobile station or electronic device as discussed below. The modules may be installed at the factory or can be installed after distribution by, for example, a downloading operation. The operations in accordance with the modules will be discussed in more detail below.

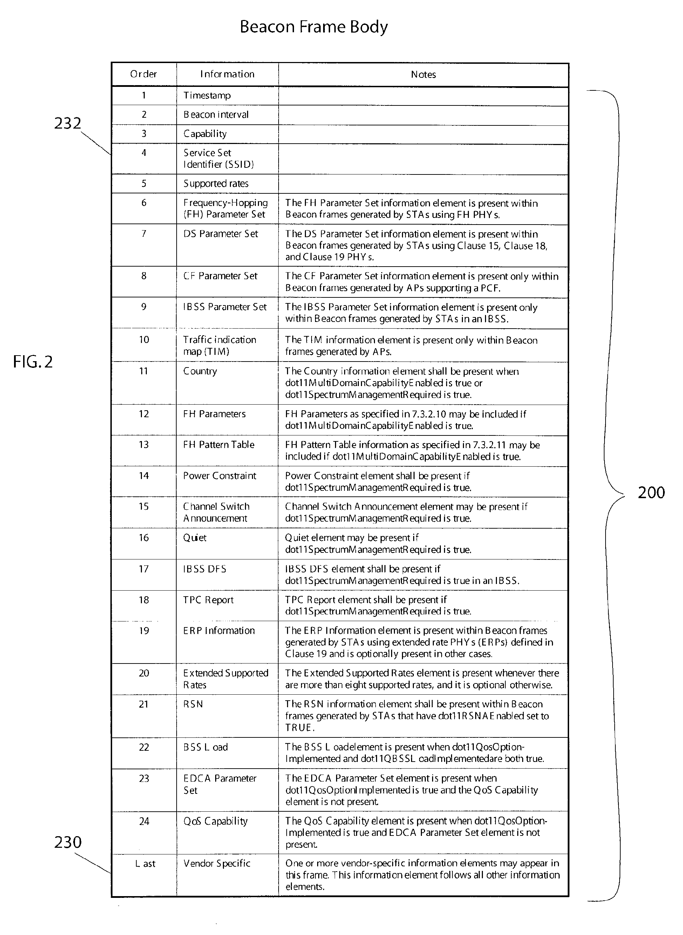

FIG. 2 is an IEEE table 200 describing elements of a beacon frame body 200. A table describing a vendor specific frame 230 is reproduced on page 128 of the same document. In pertinent part of the document of the 802.11 standard, section 7.3.2.26, it is stated that "[t]he vendor specific field information element is used to carry information not defined in this standard within a single defined format, so that reserved information element IDs are not usurped for nonstandard purposes and so that interoperability is more easily achieved in the presence of nonstandard information." An access point, for example access point 104-A (see FIG. 1), can transmit a beacon frame 106 that can include a vendor specific field 230 at least in part populated with graphic data in a form that is readable by a WIFI application stored on another device, such as device 102. A WIFI application is executable code stored on a device. When a beacon frame is detected by the device, the executable code of the WIFI application is executed, and the information of the beacon frame is processed by the device. The WIFI application stored on for example, device 102 can process the graphic data so that it can replace, add, or modify indicia of the network list. Indicia can be distinctive marks, indications and signs. For example, service information such as indicia relating to the Service Set Identifier (SSID) 232 exhibited in a standard WIFI network list may be replaced by graphic output based on the graphic data received by the device 102. Other fields of the beacon frame may be appropriately modified as well.

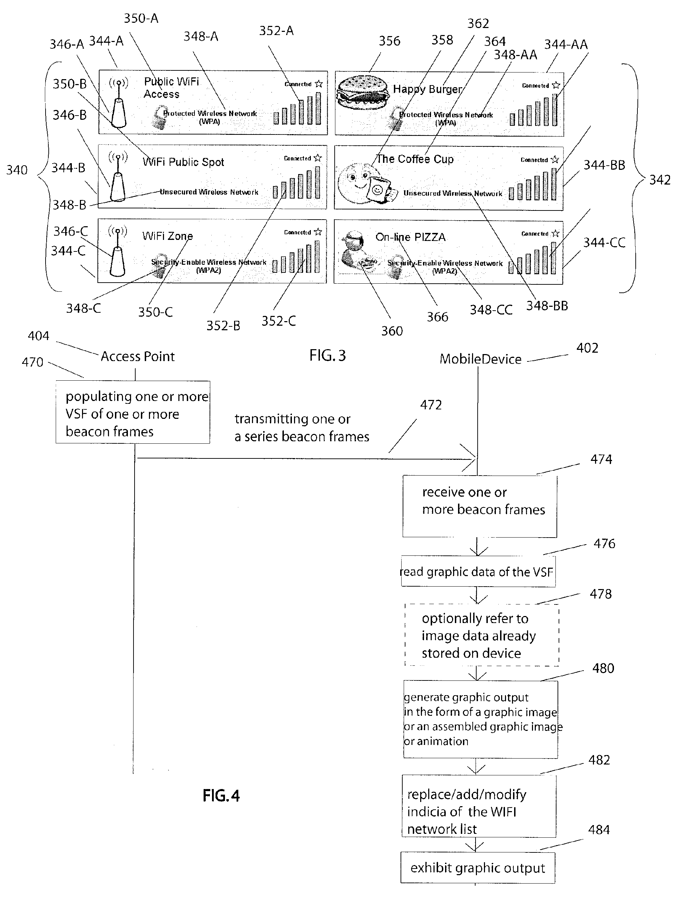

FIG. 3 depicts two WIFI network lists side-by-side, where the list on the left of the figure is a standard WIFI network list, and where the WIFI network list on the right side of the figure is a WIFI network list including graphic output based on graphic data received via a vendor specific field of a beacon frame transmitted by an access point. The WIFI network list 340 on the left of the figure is a standard WIFI network list which can be exhibited on the display 120 of the device 102. The WIFI network list 342 on the right side of the figure is a WIFI network list including graphic output based on graphic data received via a vendor specific field of a beacon frame transmitted, for example, by an access point 104. WIFI network list 342 can be exhibited on the display 120 of the device 102. It is understood that in the event that the device 102 detects a beacon frame transmitted by one access point, a WIFI network list may contain only one available network. It is understood that a WIFI network list having any number of available networks is within the scope of this discussion.

The WIFI network list 340 shows three elements 344-A, 344-B, and 344-C indicating three available WIFI networks, which can be exhibited on the display 120 (see FIG. 1) of the device 102. Each element 344-A, 344-B, and 344-C of the WIFI network list 340 includes a standard graphic 346-A, 346-B and 346-C indicating that a connection to an access point can be wirelessly established. Each element 344-A, 344-B, and 344-C of the WIFI network list 340 may include information 348-A, 348-B and 348-C indicating the security level possible once a connection is established. The identifying indicia 350-A, 350-B and 350-C may be provided by the SSID field 232 (see FIG. 2) of the beacon frame 200. The signal strength bars 352-A, 352-B and 352-C may be generated by the device 102 as it detects the signal of the access points 104-A, 104-B and 104-C transmitting the beacon frames.

The WIFI network list 342 shows three elements 344-AA, 344-BB, and 344-CC indicating three available WIFI available networks, which in this illustration are the same available WIFI networks depicted in WIFI network list 340. As described above, instead of exhibiting a standard WIFI network 340, the WIFI network list 342 shows graphic output 356, 358, 360 based on graphic data populating the vendor specific fields of beacon fields, in this example, transmitted by access points 104-A, 104-B and 104-C (see FIG. 1). The graphic output 356, 358 and 360 in this example replaces standard graphic 346-A, 346-B and 346-C. The graphic output 362, 364 and 366 in this example replaces the SSID information 350-A, 350-B, and 350-C that is otherwise transmitted in the beacon frame. While depicted as the same information 348-A, 348-B and 348-C indicating the security level possible once a connection is established, elements 348-AA, 348-BB and 348-CC may likewise be replaced with graphic output based on graphic data populating the vendor specific field of a beacon frame. The signal strength bars 352-AA. 352-BB and 352-CC may be generated by the device 102 as it detects the signal of the access points transmitting the beacon frames. In this way, a user reviewing a WIFI network list 342 beneficially would be able to easily distinguish the origins of available WIFI networks. It would also be beneficial to an owner of an access point to provide its own service information to a user reviewing a WIFI network list 342.

FIG. 4 is a signal flow diagram illustrating an access point 404 transmitting at least one beacon frame having a vendor specific field populated with graphic data that is detected by a device 402. The access point 404, as discussed above, may include a controller 112 (see FIG. 1), a transceiver 114 to transmit the beacon frames, and a memory 116 to store modules 118 which can contain instructions that can be processed by the controller 112. Accordingly the access point is configured to populate 470 one or more vendor specific fields of one or more beacon frames with graphic data and to transmit 472 the same.

Also discussed above, the mobile communication device 402 may include a display 120 (see FIG. 1) that can display indicia, in particular a WIFI network list, a controller 122, a transceiver to receive the beacon frames 124, and a memory 126 to store modules 128 which can contain instructions that can be processed by the controller 122. Accordingly the mobile device 402 can receive 474 one or more beacon frames in accordance with module 174; read 476 the graphic data of the vendor specific field in accordance with module 176; optionally refer 478 to image data already stored on the device 402 as per instructions delivered by the vendor specific field; generate 480 graphic output at the display 120 in the form of a graphic image or an assembled graphic image or animation in accordance with module 180 and/or replace, add, and modify 482 indicia of a standard or semi-standard WIFI network list in accordance with module 182; and exhibit 484 the graphic output in accordance with module 184. It is understood that other steps or processes may be included, and/or one or more may be modified or deleted in accordance with this discussion. Image data is similar to or the same as graphic data that is already stored on the device may be stored in memory, and can be processed by the WIFI application to generate graphic output.

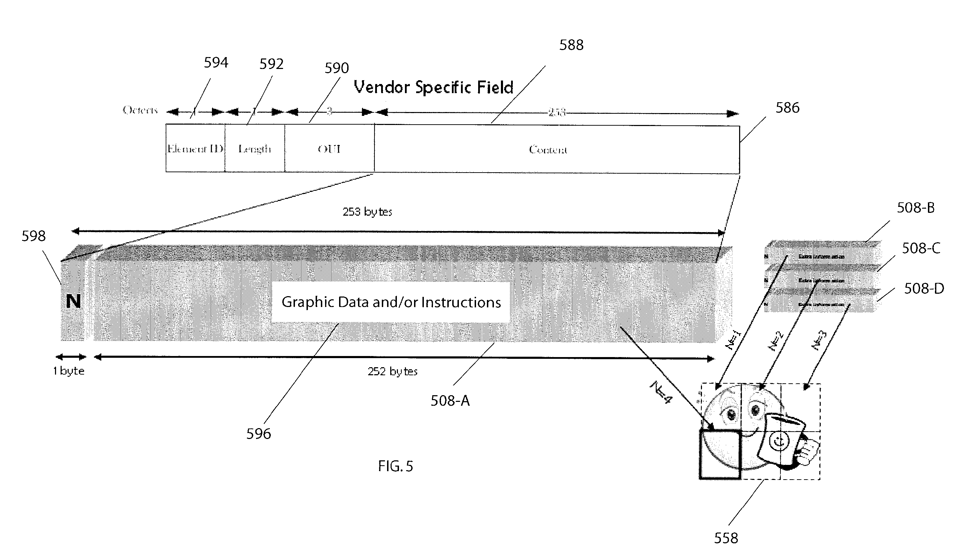

FIG. 5 illustrates a vendor specific field format 586 having allocated bandwidth for content 588 and a series of vendor specific fields having graphic data that when assembled and exhibited in a WIFI network list, provides an assembled graphic image. It is understood that graphic data can be any format. For example, graphic data may be a format such as Joint Photographic Experts Group (JPEG) and Graphics Interchange Format (RAW). The specific vendor field format further includes an Element ID field 590, a length field 592, and OUI field 594, as is known in the art.

Also illustrated is a plurality of vendor specific fields 508-A, 508-B, 508-C and 508-D, each one inside a different beacon frame 108-A, 108-B, 108-C and 108-D (see FIG. 1) the plurality of vendor specific fields providing graphic data and/or instructions 596 in a form that is readable and/or executable by a WIFI application stored on another device 102 (see FIG. 1). The graphic data 596 can be assembled to form an image 558. Each of a series of signals 108-A, 108-B, 108-C and 108-D (see FIG. 1) generated by an access point 104-B includes a plurality of vendor specific fields 508-A, 508-B, 508-C and 508-D can include a first field 598 to indicate which one a particular signal is in the series of signals 108-A, 108-B, 108-C and 108-D. That is, field 598 may indicate a "1" to say that that particular vendor specific field is the first in the series. Next, the field 598 may indicate a "2" to say that that particular vendor specific field is the second in the series, and so on.

Instructions may also populate the vendor specific field 586 that may be executed by the device 102 in generating the graphic output based on the graphic data 558. For example, instructions 182 (see FIG. 1) may indicate which elements of a standard WIFI network list 340 (see FIG. 3) to replace with graphic data 588, how to add elements to the WIFI network list 340, and/or how to modify elements of the WIFI network list 340. An application stored in memory 126 of the device 102 that cooperates with the controller 122 can process graphic data 588 and/or instructions 182 to provide a WIFI network list 342 including graphic output derived from the vendor specific field 586. In one embodiment, instructions 588 can refer 478 (see FIG. 4) to image data that is already stored on a device 102.

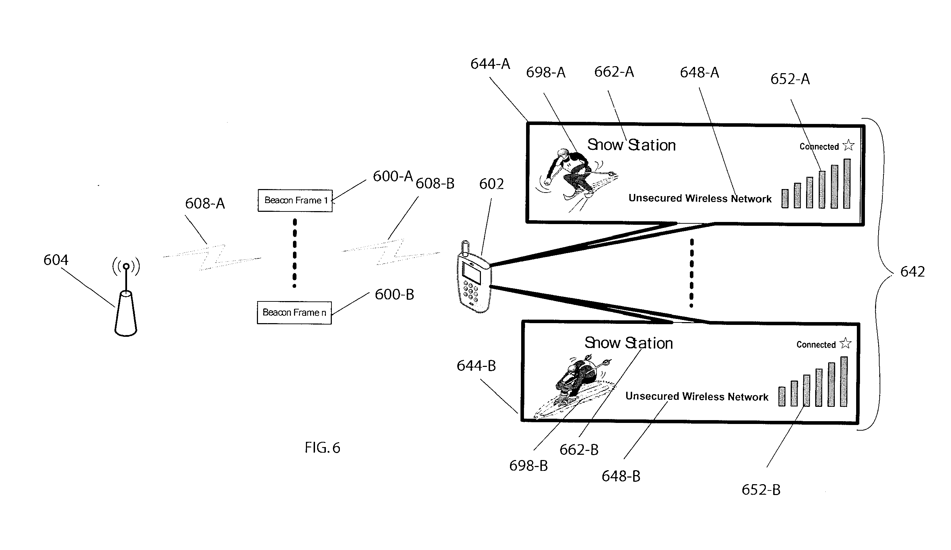

FIG. 6 illustrates a series of beacon frames transmitted by an access point including vendor specific fields having graphic data that when assembled and exhibited in a WIFI network list, provides animation in the WIFI network list. The access point 604 transmits a series of signals 608-A, the series depicted as including a plurality of beacon frames 600-A and 600-B. The device 602 receives the series of signals 608-B that of which carrying different graphic data 596 (see FIG. 5) to form animation. In this example, the WIFI network list 642 includes one available network, the snap-shots 644-A and 644-B showing changing images 698-A and 698-B to form animation. The series of graphic data of the beacon frames 600-A through 600-B is assembled to generate output of an assembled graphic image in the form of an animated images. That is, the animation is provided by several images on several beacon frames to give the impression and/or feeling of movement.

The identifying indicia 662-A and 662-B is the content of the SSID field 232 (see FIG. 2) of the beacon frame 200. Each element of the WIFI network list 642 may include information 648-A and 648-B indicating the security level possible once a connection is established. The signal strength bars 652-A and 652-B may be generated by the device 102 as it detects the signal of the access points transmitting the beacon frames. It is understood that any indicia of a WIFI network list may be replaced and/or modified, and/or indicia may be added in accordance with this discussion.

A user reviewing a WIFI network list beneficially may be able to easily distinguish the origin of an available WIFI network as discussed above. Moreover, a user may be able to easily distinguish the origins of a plurality of available WIFI networks when viewing a WIFI network list. Additionally, as discussed above, an owner or operator of an access point may beneficially provide its own service information to a user reviewing a WIFI network list.

This disclosure is intended to explain how to fashion and use various embodiments in accordance with the technology rather than to limit the true, intended, and fair scope thereof. The foregoing description is not intended to be exhaustive or to be limited to the precise forms disclosed. Modifications or variations are possible in light of the above teachings. The embodiment(s) was chosen and described to provide the best illustration of the principle of the described technology and its practical application, and to enable one of ordinary skill in the art to utilize the technology in various embodiments and with various modifications as are suited to the particular use contemplated. All such modifications and variations are within the scope of the invention as determined by the appended claims.

## Claims

1. A method of an access point (404) for a device (102), comprising:
populating (470) a vendor specific field of the beacon frame so that the vendor specific field includes graphic data, wherein graphic data is data in a format that when processed by another device is output as a graphic image, the graphic data being in a form that is readable by a WIFI application stored on another device;
transmitting (472) the beacon frame having the vendor specific field at least in part populated with the graphic data; and
receiving the beacon frame at another device (102), the another device being configured to generate based on the graphic data a graphic image on a display (120).

2. The method of claim 1 wherein populating the vendor specific field includes providing an instructions that relates to image data stored on the another device (102).

3. The method of claim 1 further comprising:
populating a plurality vendor specific fields, each one of a beacon frame wherein populating the plurality of vendor specific fields includes providing a series of graphic data in a form that is readable by a WIFI application stored on another device; and
transmitting a series of beacon frame bodies so that when read and output by another device, the series of graphic data is assembled to a form output of a graphic image.

4. The method of claim 1 further comprising:
populating a plurality vendor specific fields, each one of a beacon frame wherein populating the plurality of vendor specific fields includes providing a series of graphic data in a form that is readable by a WIFI application stored on another device; and
transmitting a series of beacon frame bodies so that when read and output by another device, the series of graphic data forms animated graphic output.

5. The method of claim 3 or 4 further comprising:
transmitting within a leading vendor specific field, the number of vendor specific fields in the series of beacon frames.

6. The method of claim 1 further comprising:
transmitting within the vendor specific field instructions to replace indicia of the WIFI network list for exhibition on another device with graphic output based on the graphic data.

7. The method of claim 1 further comprising:
transmitting within the vendor specific field instructions to add indicia to the WIFI network list for exhibition on another device with graphic output based on the graphic data.

8. A device (102), comprising:
a processor (122) configured to process instructions;
a transceiver (124) coupled to the processor, the transceiver configured to detect a WIFI beacon frame;
a display (120) coupled to the processor, the display configured to exhibit indicia in the form of a WIFI network list;
memory (126) coupled to the processor, the memory including instructions stored thereon configured to determine when a WIFI beacon from is detected, to read graphic data of a vendor specific field of the WIFI beacon frame, wherein graphic data is data in a format that when processed by another device is output as a graphic image, to generate graphic output based on the graphic data of the vendor specific field, and to exhibit the graphic output in a WIFI network list on the display.

9. The device of claim 8 wherein the graphic output in the WIFI network list replaces indicia of the WIFI network list.

10. The device of claim 8 wherein the graphic output in the WIFI network list adds indicia to the WIFI network list.

11. The device of claim 8 wherein the transceiver is configure to receive a series of beacon frames, and wherein the instructions are configured to process the graphic data of vendor specific fields of each of the series of beacon frames so that the graphic data is output as animated graphic output on the display.

12. The device of claim 8 wherein the transceiver is configure to receive a series of beacon frames, and wherein the instructions are configured to process the graphic data of vendor specific fields of each of the series of beacon frames so that the graphic data is output as an assembled graphic image on the display.

13. A signal generated by an access point, comprising:
a series of beacon frame signals, each including a vendor specific field including a first field to indicate which one a particular signal is in the series of signals, and a second field populated with a segment of graphic data, wherein graphic data is data in a format that when processed by another device is output as a graphic image, the graphic data when read and output by a WIFI application of another device is assembled by the another device to form assembled graphic image on a display.

14. The series of signals of claim 13 wherein the graphic data is configured to be assembled so that it forms animated graphic output.

15. The series of signals of claim 13 wherein the graphic data is configured to be assembled so that it forms output of an assembled graphic image.

## Patentansprüche

1. Verfahren für einen Zugriffspunkt (404) für ein Gerät (102), Folgendes umfassend:
Die Auffüllung (470) eines anbieterspezifischen Feldes des Beacon Frames, sodass das anbieterspezifische Feld grafische Daten enthält, wobei die grafischen Daten in einem Datenformat vorliegen, die bei der Verarbeitung durch ein anderes Gerät als ein grafisches Bild ausgegeben werden, und die grafischen Daten in einem Format vorliegen, das von einer auf einem anderen Gerät gespeicherten Wi-Fi-Anwendung gelesen werden kann,
das Senden (472) eines Beacon Frames mit einem herstellerspezifischen Feld, das zumindest teilweise mit den grafischen Daten bestückt ist, und
das Empfangen eines Beacon Frames auf einem anderen Gerät (102), wobei das andere Gerät so konfiguriert ist, dass, basierend auf den grafischen Daten, ein grafisches Bild in der Anzeige (120) generiert wird.

2. Verfahren nach Anspruch 1, wobei die Auffüllung des anwenderspezifischen Feldes die Bereitstellung einer Anweisung beinhaltet, die sich auf die auf einem anderen Gerät (102) gespeicherten Bilddaten bezieht.

3. Meldung nach Anspruch 1, ferner umfassend:
das Auffüllen einer Vielzahl von anbieterspezifischen Feldern, wobei jedes einen Teil des Beacon Frames darstellt, wobei das Auffüllen der Vielzahl der anbieterspezifischen Felder eine Serie von grafischen Daten in einem Format umfasst, das von einer auf einem anderen Gerät gespeicherten Wi-Fi-Anwendung gelesen werden kann, und
das Senden einer Reihe von Beacon Frame-Körpern, sodass wenn einer von einem anderen Gerät gelesen und ausgegeben wird, die Serie von Grafikdaten zur Bildung und Ausgabe eines grafischen Bildes verwendet werden kann.

4. Verfahren nach Anspruch 1, ferner umfassend:
das Auffüllen einer Vielzahl von anbieterspezifischen Feldern, wobei jedes einen Teil des Beacon Frames darstellt, wobei das Auffüllen der Vielzahl von anbieterspezifischen Feldern eine Reihe von grafischen Daten in einem Format umfasst, das von der auf einem anderen Gerät gespeicherten Wi-Fi-Anwendung gelesen werden kann, und
die Übertragung einer Reihe von Beacon Frame-Körpern, sodass, wenn diese von einem anderen Gerät gelesen und ausgegeben werden, die Reihe der Grafikdaten eine animierten grafische Ausgabe bildet.

5. Verfahren nach Anspruch 3 oder 4, ferner umfassend:
das Senden eines führenden anbieterspezifischen Feldes, das die Anzahl der anbieterspezifischen Felder in der Reihe der Beacon Frames enthält.

6. Verfahren nach Anspruch 1, ferner umfassend:
die Übertragung von Anweisungen innerhalb des anbieterspezifischen Feldes zum Ersetzen der Identifizierungsvermerke der Wi-Fi-Netzwerkliste für die Anzeige auf einem anderen Gerät, wobei die grafische Ausgabe auf den grafischen Daten basiert.

7. Verfahren nach Anspruch 1, ferner umfassend:
die Übertragung einer Anweisung innerhalb des anbieterspezifischen Feldes zum Hinzufügen von Identifizierungsvermerken zur Wi-Fi-Netzwerkliste für die Anzeige auf einem anderen Gerät, wobei die grafische Ausgabe auf den grafischen Daten basiert.

8. Gerät (102), Folgendes umfassend:
einem Prozess (122), der zur Verarbeitung von Anweisungen konfiguriert ist, einen mit dem Prozessor gekoppelten Sender/Empfänger (124), wobei der Sender/Empfänger so konfiguriert ist, dass er einen Wi-Fi-Beacon Frame erkennt,
eine mit dem Prozessor gekoppelte Anzeige (120), wobei die Anzeige zur Darstellung von Identifizierungsvermerken in Form einer Wi-Fi-Netzwerkliste konfiguriert ist,
ein mit dem Prozessor gekoppelter Speicher (126), wobei der Speicher Anweisungen beinhaltet, die in ihm gespeichert sind, um konfiguriert, um zu ermitteln, wann ein Wi-Fi Beacon Frame erkannt wird, um die grafischen Daten eines anbieterspezifischen Feldes des Wi-Fi Beacon Frames auszulesen, worin die grafischen Daten Daten in einem Format sind, die, wenn sie von einem anderen Gerät verarbeitet werden, als grafisches Bild ausgegeben werden, um so eine grafische Ausgabe zu generieren, basierend auf den grafischen Daten des anbieterspezifischen Feldes, und um die grafische Ausgabe in einer Wi-Fi-Netzwerkliste in der Anzeige anzeigen.

9. Gerät nach Anspruch 8, wobei die grafische Ausgabe in der Wi-Fi-Netzwerkliste die Indentifizierungsvermerke in der Wi-Fi-Netzwerkliste ersetzt.

10. Gerät nach Anspruch 8, wobei die grafische Ausgabe in der Wi-Fi-Netzwerkliste Identifizierungsvermerke in der Wi-Fi-Netzwerkliste hinzufügt.

11. Gerät nach Anspruch 8, wobei der Sender/Empfänger konfiguriert ist, eine Reihe von Beacon Frames zu empfangen, und worin Anweisungen zur Verarbeitung der grafischen Daten der anbieterspezifischen Felder jeder der Serie von Beacon Frames konfiguriert sind, sodass die grafischen Daten als animierte grafische Ausgabe auf der Anzeige ausgegeben werden.

12. Gerät nach Anspruch 8, wobei der Sender/Empfänger konfiguriert ist, eine Reihe von Beacon Frames zu empfangen, und worin Anweisungen zur Verarbeitung der grafischen Daten der anbieterspezifischen Felder jeder der Reihen von Beacon Frames konfiguriert sind, sodass die grafischen Daten als zusammengesetztes grafisches Bild in der Anzeige ausgegeben werden.

13. Signal, generiert durch einen Zugriffspunkt, bestehend aus:
einer Reihe von Beacon Frame-Signalen, jedes einschließlich eines anbieterspezifischen Feldes, einschließlich eines ersten Feldes zur Anzeige, welches der jeweiligen Signale sich in der Reihe der Signale befindet, und ein zweites Feld, ausgefüllt mit einem Segment der grafischen Daten, worin die grafischen Daten Daten in einem Format sind, das, wenn sie von einem anderen Gerät verarbeitet werden, als grafisches Bild ausgegeben wird wobei die grafischen Daten, wenn sie von einer WiFi-Anwendung eines anderen Geräts ausgelesen und ausgegeben werden, von dem anderen Gerät zusammengesetzt werden, um so ein zusammengesetztes grafisches Bild in einer Anzeige zu bilden.

14. Reihe der Segmente nach Anspruch 13, wobei die grafischen Daten zum Zusammensetzen konfiguriert sind, sodass diese eine animierte grafische Ausgabe bilden.

15. Reihe der Signale nach Anspruch 13, wobei die grafischen Daten zum Zusammensetzen konfiguriert sind, sodass diese die Ausgabe eines zusammengesetzten grafischen Bildes bildet.

## Revendications

1. Procédé d'un point d'accès (404) pour un dispositif (102), comprenant :
le remplissage (470) d'un champ de la trame de balise spécifique au fournisseur de sorte que le champ spécifique au fournisseur comprenne des données graphiques, dans lequel les données graphiques sont des données sous un format qui, lors du traitement par un autre dispositif, sont sorties sous forme d'image graphique, les données graphiques étant sous un format qui est lisible par une application WIFI stockée dans un autre dispositif ;
la transmission (472) de la trame de balise ayant le champ spécifique au fournisseur rempli en partie par les données graphiques ; et
la réception de la trame de balise au niveau d'un autre dispositif (102), l'autre dispositif étant conçu pour générer sur la base des données graphiques une image graphique sur un écran (120).

2. Procédé selon la revendication 1, dans lequel le remplissage du champ spécifique au fournisseur inclut la fourniture d'instructions qui concernent des données d'images stockées dans l'autre dispositif (102).

3. Procédé selon la revendication 1 comprenant en outre :
le remplissage d'une pluralité de champs spécifiques au fournisseur, chacun d'entre eux d'une trame de balise, dans lequel le remplissage de la pluralité de champs spécifiques au fournisseur inclut la fourniture d'une série de données graphiques sous une forme qui est lisible par une application WIFI stockée dans un autre dispositif ; et
la transmission d'une série de corps de trame de balise de sorte que, lors de la lecture et de la sortie par un autre dispositif, la série de données graphiques est assemblée en une sortie sous forme d'une image graphique.

4. Procédé selon la revendication 1 comprenant en outre :
le remplissage d'une pluralité de champs spécifiques au fournisseur, chacun d'entre eux d'une trame de balise, dans lequel le remplissage de la pluralité de champs spécifiques au fournisseur inclut la fourniture d'une série de données graphiques dans sous forme qui est lisible par une application WIFI stockée dans un autre dispositif ; et
la transmission d'une série de corps de trame de balise de sorte que, lors de la lecture et la sortie par un autre dispositif, la série de données graphiques forme une sortie graphique animée.

5. Procédé selon la revendication 3 ou 4 comprenant en outre :
la transmission, dans un champ principal spécifique au fournisseur, du nombre de champs spécifiques au fournisseur dans la série de trames de balise.

6. Procédé selon la revendication 1 comprenant en outre :
la transmission, dans le champ spécifique au fournisseur, d'instructions pour remplacer des indications de la liste de réseaux WIFI pour l'exposition sur un autre dispositif avec sortie graphique sur la base des données graphiques.

7. Procédé selon la revendication 1 comprenant en outre :
la transmission, dans le champ spécifique au fournisseur, d'instructions pour ajouter des indications à la liste de réseaux WIFI pour l'exposition sur un autre dispositif avec sortie graphique sur la base des données graphiques.

8. Dispositif (102), comprenant :
un processeur (122) conçu pour traiter des instructions ;
un émetteur-récepteur (124) couplé avec le processeur, l'émetteur-récepteur conçu pour détecter une trame de balise WIFI ;
un écran (120) couplé avec le processeur, l'écran conçu pour présenter des indications sous la forme d'une liste de réseaux WIFI ;
une mémoire (126) couplée avec le processeur, la mémoire incluant des instructions stockées en elle conçue pour déterminer quand une trame de balise WIFI est détectée, pour lire des données graphiques d'un champ spécifique au fournisseur de la trame de balise WIFI, dans laquelle les données graphiques sont des données sous un format qui, lorsqu'elles sont traitées par un autre dispositif, sont sorties sous forme d'une image graphique, pour générer une sortie graphique sur la base des données graphiques du champ spécifique au fournisseur, et pour présenter la sortie graphique dans une liste de réseaux WIFI sur l'écran.

9. Dispositif selon la revendication 8, dans lequel la sortie graphique dans la liste de réseaux WIFI remplace des indications dans la liste de réseaux WIFI.

10. Dispositif selon la revendication 8, dans lequel la sortie graphique dans la liste de réseaux WIFI ajoute des indications dans la liste de réseaux WIFI.

11. Dispositif selon la revendication 8, dans lequel l'émetteur-récepteur est conçu pour recevoir une série de trames de balise, et dans lequel les instructions sont conçues pour traiter les données graphiques de champs spécifiques au fournisseur de chacune des séries des trames de balise de sorte que les données graphiques sont sorties sous forme d'une sortie graphique animée sur l'écran.

12. Dispositif selon la revendication 8, dans lequel l'émetteur-récepteur est conçu pour recevoir une série de trames de balise, et dans lequel les instructions sont conçues pour traiter les données graphiques de champs spécifiques au fournisseur de chacune des trames de balise de sorte que les données graphiques sont sorties sous forme d'une image graphique assemblée sur l'écran.

13. Signal généré par un point d'accès, comprenant :
une série de signaux de trames de balise, chacun incluant un champ spécifique au fournisseur incluant un premier champ pour indiquer lequel un signal particulier est dans la série de signaux, et un second champ avec un segment de données graphiques, dans lequel les données graphiques sont des données sous un format qui, lorsqu'elles sont traitées par un autre dispositif, sont sorties sous forme d'une image graphique, les données graphiques, lorsqu'elles sont lues et traitées par une application WIFI d'un autre dispositif, sont assemblées par l'autre dispositif pour former une image graphique assemblée sur un écran.

14. Série de signaux selon la revendication 13, dans laquelle les données graphiques sont conçues pour être assemblées de manière à former une sortie graphique animée.

15. Série de signaux selon la revendication 13, dans laquelle les données graphiques sont conçues pour être assemblées de manière à former une sortie d'une image graphique assemblée.
